# EUROPEAN PATENT APPLICATION

(11) **EP 1 342 527 A1**
(43) Date of publication of application: **10.09.2003**
(21) Application number: 03004185.9
(22) Date of filing: 27.02.2003
(51) Int. Cl.: B23K 7/00, B23K 7/10, B23K 9/013, B23K 9/127, B23K 26/10, B23K 26/38, B23K 26/42, B23K 37/00, B23K 26/03, B26D 5/00

(54) **Cutting apparatus**

(30) Priority: 01.03.2002 JP 2002055657
(71) Applicant: KOIKE SANSO KOGYO CO., LTD, Edogawa-ku, Tokyo (JP)
(72) Inventor: Koike, Yasuo, Edogawa-ku, Tokyo (JP); Takahashi, Masahiro, Edogawa-ku, Tokyo (JP); Tanabe, Ryoichi, Edogawa-ku, Tokyo (JP); Saito, Yoshiaki, Edogawa-ku, Tokyo (JP)
(74) Representative: Westphal, Mussgnug & Partner

(57) **Abstract**

A cutting apparatus with a movable cutting torch includes a truck traveling along a rail and having a gutter disposed in a direction perpendicular to the rail, a laterally moving carriage moving in a lateral direction along the gutter of the truck, and a camera arranged at a prescribed position of the truck or at the laterally moving carriage as to move at the same time as move of the cutting torch, to make cutting accurately with a simple compact structure.

## Description

### Background of the Invention

### 1. Field of the Invention

This invention relates to an apparatus for cutting workpiece trimmed in a prescribed size or irregularly shaped materials such as scraps as residuals upon cutting.

### 2. Description of Prior Art

Numerically controlled cutting apparatus equipped selectively with a cutting torch such as a gas cutting torch, a plasma cutting torch, and a laser cutting torch, is used for cutting out two-dimensional figure from steel plate, stainless steel plate, nonferrous metal plate such as aluminum or brass plate, and nonmetal plate such as acryl plate or plywood.

A case where a preset figure is cut out of a steel plate in use of a numerically controlled cutting apparatus equipped with a gas cutting torch or plasma cutting torch, is described. A cutting section receives an order of a figure designating plate thickness, material, number, etc., and the cutting section, upon reception of plural orders. accumulates the ordered figures and performs, with respect to a steel plate having specific material, plate thickness, width, and length, so called "nesting" or nesting process in which figures corresponding to the steel plate condition are selected and in which the kinds and numbers are assigned to the steel plate. The information given by the nesting treatment is converted to information understandable by the cutting apparatus, or namely NC information. The steel plate to which nesting is processed is loaded in a cutting regions of the cutting apparatus, and the NC information is inputted to the cutting apparatus based on the nesting process. Then, when the cutting apparatus starts to operate, the cutting apparatus operates according to a preset program and detects the position of the steel plate at a cutting region upon detecting plural edge faces of the steel plate. In accordance with the detected position of the steel plate, the NC information is coordinate-converted, and the steel plate is continuously cut according to the NC information.

When a member having a large size such as hull member or the like is cut, such a member is likely assigned to a specific ship, so that the steel plate tends to be in a special size which enables the member to be cut. Therefore, it is general not to assign other figures to the steel plate to which the above member is assigned. In such a case, a scrap having a relatively large area may be produced. Those scraps are frequently irregularly shaped materials having a shape other some regular shapes such as rectangular shapes or the like.

As a cutting apparatus for cutting irregularly shaped materials, a known apparatus as in a Patent Application Publication JA-5-123,863 (Patent No. 2,548,648) is for picking up images of irregularly shaped materials with a CCD camera upon providing an image pickup device as separated from the cutting apparatus, for producing data in which figures to be cut are assigned to images obtained from image picking up, and for making cutting with a cutting torch of the cutting apparatus based on the data.

However, if the image pickup device and the cutting apparatus are formed separately, there raises a problem that the apparatus becomes large. Because of no correlation between the CCD camera of the image pickup device and the cutting torch of the cutting apparatus, it is laborious, to coincide the coordinates of the images produced by the image pickup device with the coordinate of the cutting torch during cutting done by the cutting apparatus, that a pallet for mounting the workpiece, a traveling saddle for driving the cutting apparatus, and the like have to be accurately moved to match the coordinates.

### Summary of the Invention

It is an object of the invention to provide a cutting apparatus occupying a lesser space with a simpler structure having capability of cutting accurately.

To accomplish the foregoing object, the representative structure of the invention is a cutting apparatus including: a truck traveling along a rail and having a gutter disposed in a direction perpendicular to the rail; a laterally moving carriage moving in a lateral direction along the gutter of the truck; a cutting torch mounted on the laterally moving carriage; a controller for controlling traveling of the truck, laterally moving of the laterally moving carriage, and operating of the cutting torch, a camera arranged at a prescribed position of the truck or at the laterally moving carriage for picking up an image of a part or all of a cutting region; and an image processing controlling device recognizing a state of the cutting region upon processing the image picked up with the camera.

According to the above structure, the cutting torch and the camera are not structured as separated bodies, but the cutting torch and the camera are formed on the laterally moving carriage, so that the means for moving the cutting torch and the means for moving the camera can be formed as a united body. Since the cutting torch and the camera move at the same time on the laterally moving carriage, the coordinates of the figures to be cut the cutting torch are accurately recognized only by consideration of an offset of the cutting torch and the camera where the workpiece is picked up by the camera.

### Brief Description of the Drawings

The above and other objects, features and advantages of the present invention will become more apparent from the following description of the presently preferred exemplary embodiments of the invention taken in conjunction with the accompanying drawings, in which:
Fig. 1 is a schematic view showing the entire portion of a cutting apparatus according to the invention;
Fig. 2 is a diagram showing operation of the cutting apparatus;
Fig. 3 is a diagram showing operation of the cutting apparatus; and
Fig. 4 is an illustration showing a nesting process.

### Detailed Description of the Preferred Embodiments

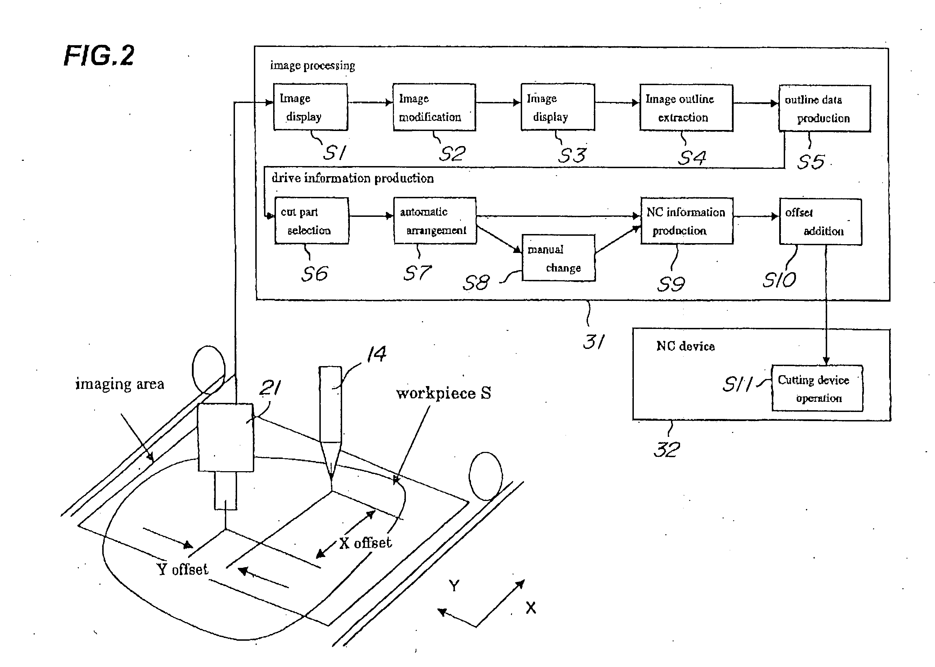

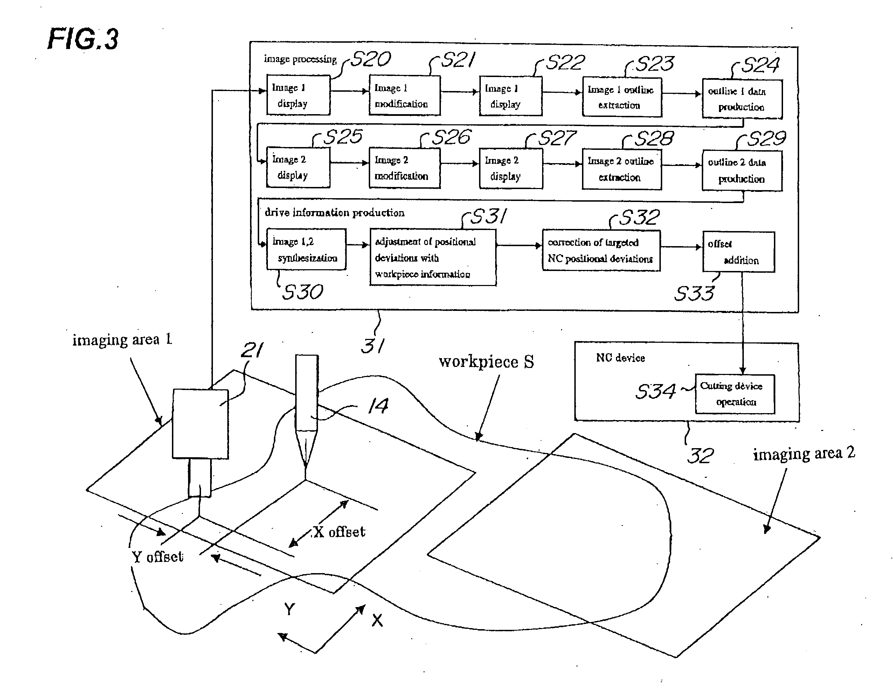

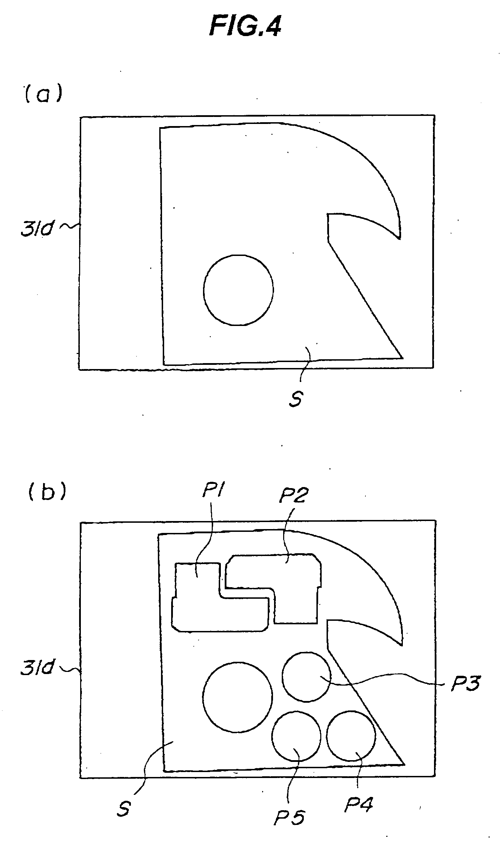

Referring to the drawings, an embodiment of a cutting apparatus is described hereinafter. Fit. 1 is a schematic view showing the entire portion of a cutting apparatus according to the invention; Fig. 2 and Fig. 3 are diagrams showing operation of the cutting apparatus; and Fig. 4 is an illustration showing a nesting process.

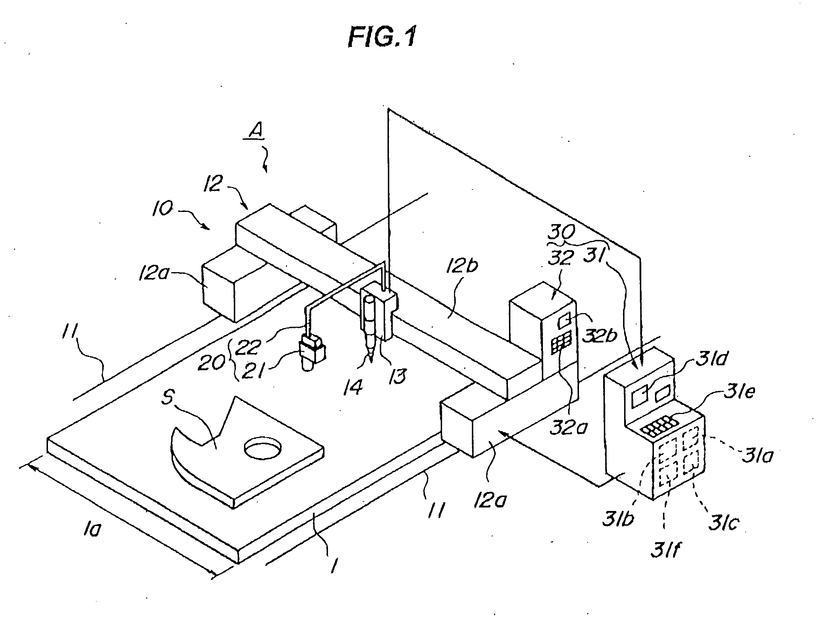

First, a structure of the cutting apparatus is described referring to Fig. 1. The cutting apparatus A shown in Fig. 1 is constituted of a cutting device 10 for cutting a workpiece S placed on a cutting region 1a on a pallet 1, an image pickup device 20 for picking up images of the workpiece S placed in the cutting region 1a, and a controller 30 for controlling the cutting apparatus A. The cutting apparatus A takes, with a CCD camera 21, pictures in the cutting regions 1a placed on the pallet 1 on which the workpiece S is disposed, and the images are processed at the image processing controlling device 31. The figures to be cut, or cut figures, memorized previously are assigned to the workpiece S, and the NC apparatus (controller) 32 controls the cutting torch 14 based on the assigned data to cut the workpiece S.

The cutting device 10 is structured so as to be mounted on rails 11 laid in parallel to each other astride the cutting region 1a and to run on the rails 11. A frame (truck) 12 of the cutting device 10 is constituted of a traveling saddle 12a moving on the rails, and a gutter 12b disposed as extending in a direction perpendicular to the rails 11, and is in a gate shape. The traveling saddle 12a is arranged with a traveling motor, not shown, and by driving the traveling motor according to commands from a numerically controlling device (NC device) 32 as a controller, the cutting device 10 is moved along the rails 11. The NC device 32, having an inputting means, a display 32b, and the like, is disposed on a top of the traveling saddle 12a. A laterally moving carriage 13 is formed at the gutter 12b as to be movable along the gutter 12b.

A laterally moving motor, not shown, driven according to commands from the numerically controlling device 32 is attached to the laterally moving carriage 13, and by driving the laterally moving, the laterally moving carriage 13 is moved along the gutter 12b. A cutting torch 14 such as a gas cutting torch, a plasma cutting torch, or a laser cutting torch is attached 10 the laterally moving carriage 13. According to the type of the cutting torch 14, the cutting device 10 is formed with various devices such as a gas supplying means, a plasma power supply, a laser oscillator, and the like, and those devices can be driven according to the commands from the NC device 32.

With the cutting device 10 thus structured, the cutting torch 14 is not able to reach the entire scope of the plane at which the rails 11 are laid but has an effective cutting region (width x length) according to such as the sizes of the traveling saddle 12a and the laterally moving carriage 13. That is, a maximum size (thickness, width, length) of the workpiece S is given at the stage designing the cutting device 10. The type of the cutting torch 14 and the size of the cutting region for cutting the workpiece are set according to the above values and the conditions such as a material of the workpiece S, and the interval and the laid length of the rails 11 are set according to the size of the cutting region. In this invention, the cutting region 1a of the cutting device 10 refers to the cutting region thus set.

With the cutting device 10, the cutting torch 14 can be moved across the entire scope of the cutting region 1a by driving the traveling motor and the laterally moving motor according to the commands from the NC device 32.

The image pickup device 20 is structured a stand 22 secured to the laterally moving carriage 13, and a CCD camera 21 attached to the front end of the stand 22. The CCD camera 21 therefore moves in an x-direction over the cutting region 1a according to movement of the frame 12 along the direction that the rails are extending, or the x-direction, and moves in a y-direction according to movement of the laterally moving carriage 13 along the direction perpendicular to the rails 11, or the y-direction, thereby being able to pickup images of the workpiece S. It is to be noted that the position of the stand 22 for supporting the CCD camera 21 is not limited to the laterally moving carriage 13 but can be secured on the traveling saddle 12a or on the gutter 12b as other than the laterally moving carriage 13, as far as capable of picking up images of the workpiece S where the CCD camera 21 is provided over the cutting region 1a.

The image pickup range of the objects taken by the CCD camera can be set by adjusting the distance between the objects and the CCD camera or the optical system. That is, if the image of the cutting region 1a of the cutting device 10 only is taken, the image of the entire rangc of the cutting region 1a can be taken at the image pickup operation of one time by providing the CCD camera 21 at a high location or using a wide-angle lens. In a case that the workpiece S placed in, cutting region 1a is recognized as a cutting capable region from images of the cutting region 1a, it is required to recognize not only the shape solely but the size of the cutting capable region. The CCD camera 21 therefore has to have a prescribed resolution. That is, the distance of the cutting region 1a corresponding to pixels adjacent in x-, y-directions when the image of the cutting region 1a is taken by the CCD camera 21 is needed to be a value capable of guaranteeing prescribed accuracy in order to recognize the workpiece S as in a cutting capable region and to conduct nesting and cutting to the cutting capable region. Accordingly, by setting the pixel number and resolution (e.g., 5 mm in this embodiment) with respect to x-, y-directions of the CCD camera 21, the area of the cutting region 1a whose image can be taken by the CCD camera 21 is defined. For example, where a relatively small size workpiece is cut, likewise in a case of a laser cutting apparatus equipped with a laser cutting torch , the size of the workpiece in the cutting region 1a can be guaranteed even where the secured CCD camera 21 takes picture of the entire cutting region 1a at once. However, if the targeted cutting process of the cutting apparatus A is for a hull member, bridge or construction member, it is general that the workpiece for cutting out those members has a large size in width and length, and it is required to take pictures of the cutting region by the CCD camera 21 at plural times as divided.

The controller 30 is constituted of the image processing controlling device 31 and the NC device 32. The image processing controlling device 31 contains a processing means 31a for processing images picked up by the CCD camera 21, an assigning means 31b for assigning the cut figures to the cutting capable region, a converting means 31c for converting the information of the assigned figures into control information of the cutting device 10, a display 31d, an inputting means 31e, a memorizing means 31f, and the like.

The processing means 31a is forms images of the cutting region 1a by integrating the images of respective image pickup regions (each picked up at one time) taken by the CCD camera 21 and recognizes the workpiece S disposed in the cutting region 1a as the cutting capable region from the images, thereby outputting on the display 31d the data upon computing such as the property (straight, arc) of the outlines, the length of the outlines, and the coordinates of start points and end points of the outlines of the workpiece S in the cutting capable region, with respect to the cutting region 1a.

The assigning means 31b is an apparatus for assigning figures to be cut to the cut capable region, which reads out the data relating to the cutting capable region memorized in the memorizing means 31f in the image processing controlling device 331, reads out the data relating to the cut figures memorized in the memorizing means 31f, and assigns the figures to be cut in the cutting capable region upon a computed comparison of both data. Then, cut data synthesized from the data relating to the cut capable region and the data relating to the figures assigned to those regions is outputted to the display 31d.

The converting means 31c is a means for outputting data upon converting the cut data output from the assigning means 31b into a using language of the NC device 32, and can output, as an output format, the cut data converted upon coupled to a disc device, not shown, or tape puncher, to such as floppy disc, or punched tape as media.

The inputting means 31e is constituted of devices such as a keyboard, an image reader, and a disc reading device, for inputting information such as manipulation command information to the cutting apparatus A, and information such as shape, size, number, quality relating to the cut figures. The memorizing means 31f is for memorizing data relating to the cut figures inputted from the inputting means 31e, and the display 31d is for displaying operation status of the cutting apparatus A and the images of the cutting region 1a or the like.

Next, the operation steps of the cutting apparatus A thus constituted is described. The cutting apparatus A of the invention has two functions when divided roughly. First one is a function to cut a new workpiece S whose data such as size are not memorized in the controller 30 in advance; and another one is a function to cut the workpiece where the controller 30 has memorized the data such as the size and shape of the workpiece and the size and shape of the cut figure in advance.

First, the function to cut a new workpiece S whose data such as size are not memorized in the controller 30 in advance is described. The cutting device 10 and the image pickup device 20 are escaped to prescribed positions (home position), and as shown in Fig. 1, the workpiece S is placed on the pallet 1. Information about the material and thickness of the workpiece S is inputted from the inputting means 31e, and at the same time, the information such as shape, material, thickness of the figures to be cut are inputted. The memorizing means 31f temporarily memorizes the data relating to the cut figures thus inputted.

When the operation of the cutting apparatus A begins, the traveling motor and the laterally moving motor drive according to the command from the NC device 32, thereby moving the image pickup device 20 to the imaging area according to the movements of the traveling saddle 12a and the laterally moving carriage 13. When the CCD camera 221 of the image pickup device 20 reaches a position capable of picking up images of the image areas, the laterally moving carriage 13 stops, and the CCD camera 221 takes pictures of the image area. The images are transmitted to the processing means 31a and temporarily stored. Where the workpiece S has a large size and where the entire picture of the workpiece S cannot be taken at once, imaging of the cutting region 1a with the CCD camera 21 is done in plural times. The entire image of the workpiece S set in the cutting region 1a is picked up by successively handling this manipulation, and the entire image of the workpiece S is recognized by synthesizing the images picked up and memorized images with the processing means 31a. After finishing the photographing, the image pickup device 20 is returned to the home position.

After image picking up with the CCD camera 21, a processing is made in the image processing controlling device 31 according to the diagram shown in Fig. 2. When the CCD camera 21 takes pictures, the processing means 31a forms the entire image of the workpiece S as shown in Fig. 4(a), and the entire image is shown on the display 31d (S1). The processing means 31a automatically modifies warps or the like of the lens in the entire image thus taken, and the image is displayed again on the display 31d (S2, S3). A judgment is made as to whether the outline of the workpiece S is straight and curved from the entire image, and data of the outline is extracted by an arc interpolation when the outline is curved (S4). The coordinate data of the start point and end point of the outlines as well as the length of the outlines are calculated. The respective data thus obtained are outputted as the outline data (S5).

When the outline data are formed by the processing means 31a, the assigning means 31b selects the data relating to the figures of the part to be cut, which are memorized in advance in the memorizing means 31f and reads out the data (S6), and as shown in Fig. 4(b), where the figures (P1 to P5) coinciding to the material and thickness of the workpiece S are extracted, those extracted figures are assigned automatically to a region capable of cutting within the outlines (S7). It is to be noted that at that time, the operator may manually re-adjust the position or the like of the figures that already assigned and overlapped, via the inputting means 31e in use of the images on the display 31d (S8). This is because the images of edges of the workpiece S may not be obtained accurately according to brightness, shade, states of the edges of the workpiece, state of the pallet 1, from the influence of the circumstance during image picking-up. Thus, the images taken by the CCD camera 21 and the figures to be cut are overlapped to correct positional deviations among images due to differences in the circumstances of the workpiece S as the cutting target.

When assignment of the figures to be cut to the cutting capable region is completed, the data are outputted to the image processing controlling device 31, in which the converting means 31c converts the date into the language of the NC device 32, thereby producing the NC information. At that time, offsets in the x-direction and y-direction between the cutting torch 14 and the CCD camera 21 as shown in Fig. 2 are added to the NC information (S9, S10). Since in this invention, the CCD camera 21 and the cutting torch 14 are structured to move at the same time, accurate NC information for cutting with the cutting torch 14 can be produced easily in consideration only of the offsets to the images picked up by the CCD camera and processed thereat.

Where drive information is thus produced based on image processing by the image processing controlling apparatus 31, the NC information is transmitted from the image processing controlling apparatus 31 to the NC device 32 and stored therein. When a command to execute the cutting work is sent to the NC device 32, the NC information memorized in the NC device 32 is read in, and the cutting device 10 starts running (S11) to move from the home position. When the cutting torch 14 reaches the figures assigned to the workpiece S, the cutting torch 14 operates, and the traveling saddle 12a and the laterally moving carriage 13 are driven as in response to the figure data, thereby cutting the figures to be cut. When all of the figures assigned to the workpiece S are cut out by repeating the above steps, a signal meaning the end of the cutting work is transmitted from the NC device 32 to the image processing controlling apparatus 31, and the cutting device 10 escapes to the home position.

Next, a function for cutting where the controller 30 memories in advance the data such as the size and shape of the workpiece and the size and shape of the figures to be cut, is described. In such a case, because the size and shape of the workpiece and the size and shape of the figures to be cut are previously recognized, the cutting device 10 can cut the workpiece upon recognizing as to what position the workpiece S takes as being mounted on the pallet 1. With the cutting apparatus A according to this invention, the workpiece S is pictured at several points by the CCD camera 21, and the image processing controlling apparatus 31 makes processing based on the images obtained by this image picking-up to recognize the position that the workpiece S is mounted. A specific description is as follows.

The workpiece S whose shapes or the like are memorized in advance in the memorizing means 31f is placed on the pallet 1, and data that it is the memorized workpiece S are inputted from the inputting means 31e. When the cutting apparatus A is started to operate, the CCD camera 21 picks up images regarding the workpiece S in imaging areas (see, Fig. 3) located in two places in the same manner as described above according to the command from the NC device 32. It is to be noted that, since taking pictures at the two places is for recognizing the workpiece with a higher accuracy, taking picture at a single place may allow recognition of the shape of the workpiece. Taking pictures is not limited to two places, and can be at a single place or three or more places. The respective imaging regions can be of the entire portion or a part of the workpiece S.

It is preferable to pickup images with the CCD camera 21 whose position is substantially the same as the position taken at a time that the pictures of the workpiece memorized in the memorizing means 31f are taken. In this situation, before the cutting is made, it is required to control the position of the CCD camera 21. As an adjusting method for the position of the CCD camera 21, a conceivable method is that, when images of the workpiece are taken to be stored in the memorizing means 31f, images of cross cursor, line, short line, template for adjustment, or the like are taken at the same time as the workpiece, and images of the cross cursor and the like are taken at the same time before cutting is made by the cutting apparatus A.

After the images are taken by the CCD camera 21, a processing is executed at the image processing controlling device 31 along the steps shown in Fig. 3. After images are picked up by the CCD camera 21, the data of the outlines are produced with respect to the respective imaging regions 1, 2 by the processing means 31a in a manner as described above (S20 to S29). The processing means 31a synthesizes those data of the outlines (S30), and positional deviations are adjusted between both of the data in comparison of the obtained data of the workpiece S and the data of the workpiece memorized in the memorizing means 31f (S31).

After the positional deviations are adjusted, since the figures to be cut are assigned in advance to the memorized workpiece S, the assigning means 31b does not operate, and the data adjusting the position deviations are outputted to the image processing controlling device 31 to render the converting means 31c convert the data to the language of the NC device 32. At that time, as shown in Fig. 3, the offsets in the x-direction and y direction between the cutting torch 14 and the CCD camera 21 are added to the NC information (S32, S33).

When the drive information is produced based on the image processing done by the image processing controlling device 31, the NC information is transmitted from the image processing controlling device 31 to the NC device 32 and is memorized. When the command to execute the cutting work is outputted to the NC device 32, the NC information memorized in the NC device 32 is read in, and the cutting device 10 is started to operate (S34) and moves from the home position. When the cutting torch 14 reaches the figures assigned to the workpiece S, the cutting torch 14 operates, and the traveling saddle 12a and the laterally moving carriage 13 are driven as in response to the figure data, thereby cutting the figures to be cut. When all of the figures assigned to the workpiece S are cut out by repeating the above steps, a signal meaning the end of the cutting work is transmitted from the NC device 32 to the image processing controlling apparatus 31, and the cutting device 10 escapes to the home position.

In this invention, as described above, because the image pickup device 20 is disposed in a united body on the cutting device 10, the means for supporting the cutting torch 14 and the means for supporting the CCD camera 21 are not required to be separated bodies, and therefore, the apparatus can be made compact. Because the image pickup device 20 is disposed as a united body on the cutting device 10, and because the cutting torch 14 and the CCD camera 21 has a correlative relation, accurate coordinates in relation to the figure positions or the like can be obtained which are needed at a time of cutting by the cutting torch 14 of the cutting device 10 upon only addition of the offsets in the x-direction and y-direction of the cutting torch 14 and the CCD camera 21 when the image pickup device 20 finishes taking pictures, so that the cutting apparatus can be provided with capability of cutting accurately.

Although in the above embodiment, exemplified is an example in which the image pickup device 20 is disposed via the stand 22 on the laterally moving carriage 13, the invention is not limited to this, and the image pickup device can be disposed on the traveling saddle 12a or the stand 22, or on the stand 22 arranged on the gutter 12b.

As described above, according to the invention, the cutting apparatus includes: a truck traveling along a rail and having a gutter disposed in a direction perpendicular to the rail; a laterally moving carriage moving in a lateral direction along the gutter of the truck; a cutting torch mounted on the laterally moving carriage; a controller for controlling traveling of the truck, laterally moving of the laterally moving carriage, and operating of the cutting torch, a camera arranged at a prescribed position of the truck or at the laterally moving carriage for picking up an image of a part or all of a cutting region; and an image processing controlling device recognizing a state of the cutting region upon processing the image picked up with the camera, so that the cutting apparatus can cut accurately with a simple structure in occupying a less space.

The foregoing description of a preferred embodiment of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined by the claims set forth below.

## Claims

1. A cutting apparatus comprising:
a truck traveling along a rail and having a gutter disposed in a direction perpendicular to the rail;
a laterally moving carriage moving in a lateral direction along the gutter of the truck;
a cutting torch mounted on the laterally moving carriage;
a controller for controlling traveling of the truck, laterally moving of the laterally moving carriage, and operating of the cutting torch,
a camera arranged at a prescribed position of the truck or at the laterally moving carriage for picking up an image of a part or all of a cutting region; and
an image processing controlling device recognizing a state of the cutting region upon processing the image picked up with the camera.

2. The cutting apparatus according to claim 1, wherein the camera is arranged to a stand secured to the laterally moving carriage.

3. The cutting apparatus according to claim 2, wherein the camera is so placed that the camera can pickup an image of all of the cutting region.

4. The cutting apparatus according to claim 2, wherein the camera picks up images of the cutting regions multiple times to integrate the entire image at the image processing controlling device.

5. The cutting apparatus according to claim 1, wherein the image processing controlling device compares the image taken by the camera with data used for nesting process.
